# EUROPEAN PATENT SPECIFICATION

(11) **EP 3 772 897 B1**
(45) Date of publication and mention of the grant of the patent: **11.10.2023**
(21) Application number: 19721142.8
(22) Date of filing: 09.04.2019
(51) Int. Cl.: A01G 9/24

(54) **GROWING SPACE FOR VERTICAL FARMING**
WACHSRAUM FÜR VERTIKALE LANDWIRTSCHAFT
ESPACE DE CULTURE POUR L'AGRICULTURE VERTICALE

(30) Priority: 13.04.2018 BE 201805253
(43) Date of publication of application: 17.02.2021
(73) Proprietor: Etablissementen Franz Colruyt NV, 1500 Halle (BE)
(72) Inventor: BAERT, Kris, 1500 Halle (BE); VOOREND, Wannes, 1500 Halle (BE); VAN VAERENBERGH, Geert, 1500 Halle (BE); VERMEIREN, Frederic, 1500 Halle (BE); SCHEPPERMANS, Eve, 1500 Halle (BE); ROELS, Sarah, 1500 Halle (BE); WILLEMYNS, Karel, 1500 Halle (BE)
(74) Representative: Gevers Patents
(86) International application number: PCT/IB2019/052897
(87) International publication number: WO 2019/197980

(56) References cited:
- WO-A1-2019/040863
- JP-A- H0 698 632
- JP-A- 2012 000 028
- NL-A- 7 008 096
- US-A1- 2013 003 382
- US-A1- 2016 157 447

## Description

### Technical field

The present invention relates to a growing space for vertical farming. In vertical farming, vertically stacked growing layers are typically employed, in a controlled environment, for instance a factory hall, office building or store. In this way, a limited space can serve for a relatively large production, wherein, in addition, it is possible to optimize the atmospheric environment within the space to benefit the growth of the plants and possibly other aspects, such as the color, taste, and the like, of the plants.

### Background art

In the prior state of the art, a number of systems have already been described for vertical farming. US 2016/157447 A1 discloses the preamble to claim 1.

GB 2 234 415 A describes a stand-alone device in which the plants are grown. The device is provided at the bottom with a growing bed in which the plants grow, and is provided with lighting at the top, in particular fluorescent lights, to provide the necessary illumination. Furthermore, the device is provided with openings in the side walls which serve as vents for the interior space, and to counter excess heat generated by the lighting arrangement. A cooling unit and a dehumidifier are also provided in the interior space. Furthermore, a ventilation system is provided, particularly comprising a plurality of pipes leading from a central unit towards the individual plants to emit a conditioned air flow onto a respective one of the plurality of plants. The aim of the ventilation system is to only provide conditioned air in the vicinity of the base of the plants, which conditioned air typically comprises a precisely set percentage of carbon dioxide.

A disadvantage of the device described in GB 2 234 415 A is that for each device, only one layer of plants can be grown, which of course results in a significant loss of space. Moreover, a plurality of ventilation systems is required, namely, a cooling means for the lights, a cooling means for the interior space, and the ventilation system, which necessarily makes the device complicated to manufacture. Moreover, there is an influence from the outside environment on the interior space in which the plants grow, which is not desired.

JP 2007/236235 A also describes a stand-alone device in which the plants are grown. The device is provided with a growing bed in which the plants grow, with lighting above the growing bed, in particular fluorescent lights, although LED lighting is also possible. The lighting arrangement is provided within a closed, partially transparent tray, such that the ambient temperature of the lights can be optimized. Specifically, a pump is provided to heat or cool the space inside the tray, depending on the circumstances, maintain the optimal operating temperature of the lights. Furthermore, a ventilation system is also provided under the growing bed, optionally using the air heated by the lights, and wherein carbon dioxide may also be added. Furthermore, a separate air conditioning system is provided for the interior space.

A disadvantage of the device described in JP 2007/236235 A is that for each device, only one layer of plants can be grown, which of course results in a significant loss of space. Moreover, a plurality of ventilation systems is required, namely, a cooling means for the lights, a cooling means for the interior space, and the ventilation system, which necessarily makes the device complicated to manufacture. Furthermore, providing the transparent tray in which the lights are located is not easy to carry out, and the tray also takes up space, which is undesirable.

WO 2011/13892 A2 describes an LED lighting specifically designed for use in a growing space provided with a plurality of growing layers, wherein each growing layer is provided with its own separate lighting. In particular, LED strips are used, as they take up little space. The LED strips, in particular the PCB on which the LED strips are arranged, are provided at the back with a heat sink, specifically an aluminum plate. Furthermore, the aluminum plate is in contact with an aluminum foil to dissipate the heat of the heat sink to the ambient air. Furthermore, a ventilation system is also provided, with in particular supports being provided having a duct incorporated therein, with openings in the duct at regular intervals, which openings for the air regulating ducts through which a conditioned air flows, which conditioned air typically comprises a precisely set percentage of carbon dioxide. As several growing layers are stacked on top of each other, the aluminum foil is relatively close to the support located above it.

A disadvantage of the growing space described in WO 2011/13892 A2 is that the heat generated by the LED strips is dissipated by the heat foil into the air located within the growing space. In other words, the heat generated by the LED strips directly influences the environment in which the plants grow, which is not desired. This may for instance lead to excessive temperatures, causing the plants' growth to be disturbed, or, in extreme cases, even causing the plants to die. Also, the placement of the heat foil in relation to the support entails that the excess heat affects the roots of the top layer of plants the most. Dissipation of the heat generated by the LED strips from the heat foil to the air is also strongly dependent on a proper air flow in the growing space, which air flow may however adversely affect the operation of the ventilation system.

### Description of the invention

The present invention aims to provide a growing space wherein the heat generated by the lighting arrangement affects the environment in which the plants grow to a lesser extent.

This aim is realized by means of a growing space for vertical farming having the characteristics of the first independent claim.

To this end, the present invention provides a growing space for vertical farming. The growing space comprises at least one growing layer. Each growing layer comprises one or more supports arranged for growing a plurality of plants. Each growing layer comprises an LED lighting arranged for illuminating the plants in the supports. Each growing layer comprises a ventilation system with a plurality of air regulating ducts. Each air regulating duct is arranged for providing a conditioned air flow onto a cluster of at least one plant of the plurality of plants in the one or more supports for air regulation in the vicinity of the respective cluster. Each growing layer comprises a heat sink in thermal contact with the LED lighting. The heat sink is arranged for diverting excess heat generated by the LED lighting. Each growing layer comprises an evacuating duct in thermal contact with the heat sink. The evacuating duct is configured for a fluid flow for substantially completely carrying away the excess heat generated by the LED lighting.

By providing a heat sink in thermal contact both with the LED lighting and with an evacuating duct through which a fluid can flow, the heat generated there by the LED lighting is virtually entirely absorbed by the flowing fluid. Moreover, the duct is arranged such that the fluid flow leads the heat absorbed into it away from the growing space, so that, contrary to the growing space described in WO 2011/13892 A2, the excess heat does not need to be dissipated inside the growing space. As a result, the heat generated by the LED lighting has less of an influence on the environment in which the plants grow.

Although the use of an evacuating duct for air flow is already known for cooling lighting arrangements, such as in the device of JP 2007/236235 A, this is accomplished by providing the lighting arrangement inside the duct, causing the air itself to enter into direct contact with the lighting arrangement. Such a construction, however, leads to loss of space due to the provision of a sufficiently large tray around the lighting arrangement. Moreover, it is not easy to provide the lighting arrangement inside a transparent tray. Furthermore, the transparent tray of course also affects the lighting of the plants. As it is never fully transparent, there will be a loss of light intensity and light energy. Also, its transparency will not be uniform across the entire spectrum of light. When using plexiglass, for instance, absorption of UV-light or even blue light occurs, which is not always desirable.

The arrangement in which LED lighting is in thermal contact with the heat sink, and in which the heat sink is in turn in thermal contact with the evacuating duct, is also advantageous for being able to adapt the lighting of the plants in the growing space to different species of plants. Here, a LED light present that is suitable for growing one species of plants may be exchanged for another LED light which is suitable for growing another species of plants, as long as sufficient thermal contact is provided between the LED lighting and the heat sink for the heat sink to be able to sufficiently carry off the excess heat generated by the LED lighting. In this scenario, LEDs with a different spectrum and/or intensity may then for instance be used, or the number of LEDs can be adapted to the number of plants. Thus, the LED density may for instance be increased for smaller plants that can be placed closer together in the supports.

The growing space is usually an enclosed space arranged for growing plants therein under controlled environmental conditions. To this end, the growing space is preferably closed off as much as possible from the outside world for keeping out external environmental conditions that affect the growth of the plants, and that may therefore affect the growth of the plants in an undesirable way.

The growing space may comprise one growing layer, wherein the plants being grown in the growing space are all at approximately the same height in the growing space. Preferably, multiple growing layers stacked on top of each other are provided in the growing space, so that plants can be grown at different heights in the growing space. This way, the amount of space available in the growing space can be used efficiently.

Preferably, at least one air regulating duct is provided for each cluster of plants of the plurality of plants in the supports, to allow a conditioned air flow to be provided for all plants in the supports. If so desired, multiple air regulating ducts may also be provided for each cluster of plants. The use of multiple air regulating ducts for each cluster of plants may, depending on the size of the cluster of plants, be of use for providing the conditioned air flow onto all plants in the same cluster. Multiple air regulating ducts for each cluster may also advantageously be used for providing conditioned air flows with different compositions, so that the composition of the combined air flow can be individually tuned for each air regulating duct. If so desired, more additional air regulating ducts can be provided between the clusters of plants.

In the context of the present invention, the term "a cluster of plants" is to be understood as a group of a number of plants standing in each other's vicinity at mutual distances that are significantly smaller than the distance between the cluster in question and neighboring clusters of plants.

In the context of the present invention, the term "providing a conditioned air flow" is to be understood as ejecting and/or suctioning off a conditioned air flow, preferably ejecting a conditioned air flow. Providing the conditioned air flow can thus mean both ejecting or blowing out an air flow with a given composition, and suctioning off or removing an air flow with a given composition, or a combination of both.

In an embodiment of the growing space according to the present invention, the evacuating duct is configured for a liquid flow. The liquid particularly comprises water. Preferably, the liquid comprises water and an antifreeze, such as for instance alcohol.

The use of water is advantageous due to its high thermal capacity. Furthermore, water also offers the advantage of a good manageability, and of being safe in use. The use of water for instance allows toxic leaks into the growing space to be avoided.

In an embodiment of the growing space according to the present invention, the LED lighting comprises a plurality of LEDs mounted onto a frame or chassis. The frame is in particular an aluminum frame.

The use of a plurality of LEDs is advantageous for being able to provide precisely directed lighting to the individual plants in the supports or to clusters of plants in the supports.

The use of an aluminum frame is advantageous, among other aspects, due to the low weight and good thermal conductivity of aluminum.

In an embodiment of the growing space according to the present invention, the evacuating duct has a duct wall. The duct wall is at least partly constituted by the frame.

In an embodiment of the growing space according to the present invention, the heat sink is constituted by the frame.

In an embodiment of the growing space according to the present invention, the duct wall is constituted by the heat sink.

In an embodiment of the growing space according to the present invention, the frame comprises one or more hollow beams. The cavities in the beams are part of the evacuating duct.

In an embodiment of the growing space according to the present invention, each of said beams is located over one of the one or more supports.

In an embodiment of the growing space according to the present invention, the LED lighting comprises one or more rows of LEDs.

In an embodiment of the growing space according to the present invention, each of said rows of LEDs is located over one of the one or more supports.

In an embodiment of the growing space according to the present invention, said rows of LEDs comprise one or more rows of LED strips.

The use of LED strips is advantageous for the exchangeability of the LED lighting in the growing space, for adapting the LED lighting to growing different species of plants in the growing space.

In an embodiment of the growing space according to the present invention, the LEDs in one row of said one or more rows of LEDs are each mounted onto one and the same of said one or more hollow beams.

In an embodiment of the growing space according to the present invention, the growing space comprises an air dehumidifier arranged for extracting excess moisture, for instance water, that is present in the air in the growing space.

The use of the air dehumidifier is advantageous for being able to regulate the atmospheric humidity in the growing space, to create the optimal growth conditions for the plants in the growing space.

In an embodiment of the growing space according to the present invention, the frame is provided with one or more fins arranged for condensing said excess moisture. The frame is provided with a gutter arranged for collecting and preferably also conveying away the condensed excess liquid from said condensed excess moisture.

In an embodiment of the growing space according to the present invention, the fins are part of the duct wall.

The fins being part of the duct wall offers the advantage that the fluid in the evacuating duct can additionally be used for conveying away the heat released when condensing the excess moisture onto the fins, so that no additional devices are to be provided for this purpose.

In an embodiment of the growing space according to the present invention, the evacuating duct is surrounded by a thermal insulation.

Surrounding the evacuating duct with the thermal insulation limits the potential influence of the evacuating duct onto the environment in the growing space, apart from conveying away the excess heat of the LED lighting. This allows a precise regulation of the environmental parameters, such as for instance temperature and atmospheric humidity, in the growing space by means of devices provided thereto in the growing space, without being influenced by the evacuating duct.

In an embodiment of the growing space according to the present invention, each air regulating duct is arranged for providing the conditioned air flow coming from the base of the plants.

In an embodiment of the growing space according to the present invention, each air regulating duct is arranged for providing the conditioned air flow at a predetermined speed so that the speed of the conditioned air flow in the vicinity of the LED lighting is substantially zero.

By providing the conditioned air flow coming from the base of the plants at a predetermined speed which is such that the speed of the conditioned air flow in the vicinity of the LED lighting is substantially zero, a bubble of the conditioned air is created around the plant, extending from the support towards the LED lighting. In this bubble, the parameters of the air, such as for instance air composition, atmospheric humidity, air temperature, etc., can then be optimized for stimulating the growth of the plants.

In an embodiment of the growing space according to the present invention, the evacuating duct forms a closed circuit to which a heat exchanger is connected which is arranged for extracting heat from the fluid.

The use of the closed circuit with the heat exchanger for extracting the heat from the fluid flowing through the evacuating duct is advantageous for reusing the fluid, and if so desired, the heat extracted from the fluid by the heat exchanger.

In an embodiment of the growing space according to the present invention, the growing space is not transparent to natural sunlight.

The growing space not being transparent to natural sunlight is advantageous for precluding possibly negative influences of natural sunlight to the growth of the plants. The lighting of the plants is then only provided by the controllable LED lighting.

In an embodiment of the growing space according to the present invention, the conditioned air flows comprise oxygen gas and/or carbon dioxide.

Oxygen gas and carbon dioxide are important gasses for stimulating the growth of plants, such as, among other things, for photosynthesis and the breathing of the plants.

In an embodiment of the growing space according to the present invention, the evacuating duct is located at least partly outside the growing space.

Running the evacuating duct at least partly outside the growing space is advantageous for allowing the excess heat from the LED lighting being conveyed off by the fluid in the evacuating duct, to be dissipated to the outside world. This, among other things, allows the fluid in the evacuating duct in a closed circuit to be reused for carrying away the excess heat of the LED lighting.

In an embodiment of the growing space according to the present invention, the growing space comprises a first growing layer and a second growing layer. The first growing layer and the second growing layer are located above each other.

In an embodiment of the growing space according to the present invention, the one or more supports of the first growing layer are supported on the LED lighting, the heat sink and/or the evacuating duct of the second growing layer.

Constructing the growing space so that the supports of one of the growing layers is supported on the LED lighting, the heat sink and/or the evacuating duct, or the structures in which these are incorporated, of another growing layer, is advantageous for keeping the vertical construction of the growing layers in the growing space compact, since it entails that no separated supporting structures are required, which would take up additional space. As a result, the amount of space available in the growing space can be used efficiently for obtaining maximum plant yield. This can for instance be advantageously achieved by integrating the LED lighting, the heat sink and/or the evacuating duct at least partly into the frame, as in the embodiments described above of the growing space according to the present invention.

In an embodiment of the growing space according to the present invention, the LED lighting, the heat sink and/or the evacuating duct of the second growing layer are integrated into the one or more supports of the first growing layer.

Integrating the LED lighting, the heat sink and/or the evacuating duct of one of the growing layers into the one or more supports of one of the other growing layers is advantageous for keeping the construction of the growing layers in the growing space compact, and thus using the amount of space available in the growing space efficiently for obtaining maximum plant yield.

In an embodiment of the growing space according to the present invention, the air regulating ducts of the ventilation system, for instance of the first growing layer, and the evacuating duct, for instance of the second growing layer, are in mutual thermal contact for conditioning the air in the respective air regulating ducts.

Also providing thermal contact between the evacuating duct of one of the growing layers and the air regulating ducts of for instance one of the other growing layers advantageously allows a dual use of one and the same evacuating duct, both for conveying away the excess heat of the LED lighting and for conditioning, for instance heating or cooling, the air in the air regulating ducts. This is both advantageous for compact construction of the growing layers in the growing space, and for efficient use of the means in the growing space.

If so desired, in other embodiments of the growing space according to the present invention, the thermal contact between the evacuating duct and the air regulating ducts may also be realized between the evacuating duct and the air regulating ducts of one and the same growing layer. In the construction of one and the same growing layer, the evacuating duct and the air regulating ducts are usually spaced apart, since providing the conditioned air flow onto the plants usually takes place from below, whereas the lighting of the plants usually takes place from above. In this construction, it is therefore advantageous to provide the thermal contact between the evacuating duct and the air regulating ducts of growing layers located above each other.

### Brief description of the drawings

The invention will hereafter be further elucidated in detail in reference to the following description and the appended drawings.
Figure 1 shows a cross section of a growing space according to an embodiment of the present invention.
Figure 2 shows a cross section of an evacuating duct and LED lighting according to an embodiment of the present invention, wherein the evacuating duct is provided at the outside with an air dehumidifier.
Figure 3 shows a cross section of an evacuating duct and LED lighting according to an embodiment of the present invention wherein the evacuating duct is provided with an insulating material.
Figure 4 shows a schematic top view of a growing space according to an embodiment of the present invention.

### Modes for carrying out the invention

The present invention will be described with respect to particular embodiments and with reference to certain drawings, but the invention is not limited thereto and is only defined by the claims. The drawings described are only schematic depictions and are non-limiting. In the drawings, the size of certain elements may be exaggerated, meaning that they are not drawn to scale, and are merely intended for illustrative purposes. The dimensions and the relative dimensions do not necessarily correspond to actual reductions to practice of the invention.

Furthermore, terms such as "first", "second", "third" and the like in the description and in the claims are used for distinguishing between similar elements, and not necessarily for describing a sequential or chronological order. The terms in question are interchangeable under appropriate circumstances, and the embodiments of the invention can operate in other sequences than those described or illustrated herein.

Moreover, terms such as "top", "bottom", "over", "under" and the like in the description and the claims are used for descriptive purposes and not necessarily for describing relative positions. The terms so used are interchangeable under appropriate circumstances, and the embodiments of the invention can operate in other orientations than those described or illustrated herein.

The term "comprising" and terms derived therefrom, as used in the claims, should not be interpreted as being restricted to the means listed respectively thereafter; the term does not exclude other elements or steps. It should be interpreted as specifying the presence of the stated features, integers, steps or components as referred to, without however precluding the presence or addition of one or more additional features, integers, steps or components, or groups thereof. Thus, the scope of an expression such as "a device comprising means A and B" is not limited to devices consisting merely of components A and B. What is meant, by contrast, is that with respect to the present invention, the only relevant components are A and B.

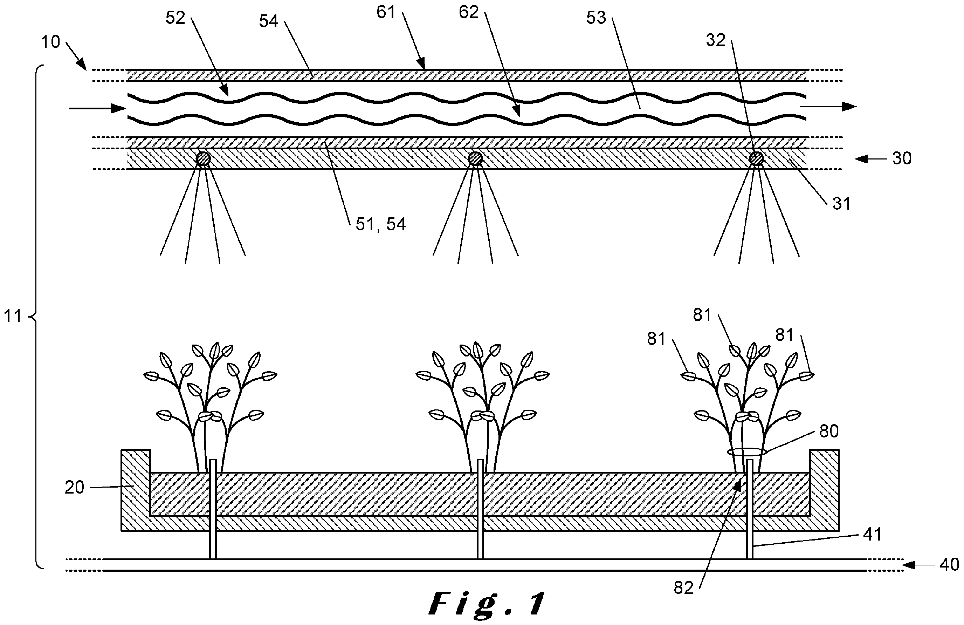

Figure 1 shows a cross section of a growing space 10 for vertical farming or multiple layer culture according to an embodiment of the present invention. The growing space 10 is arranged for growing plants therein 81 in one or more growing layers 11, which are arranged on top of each other in the growing space 10 for optimal use of the amount of space available. The growing space 10 is preferably closed off as much as possible from the outside world for keeping out external environmental conditions. This allows the environmental conditions in the growing space 10, such as temperature, lighting, air composition, etc., to be precisely regulated without any outside influences, for optimizing the growth conditions of the plants 81 in the growing space 10.

Each growing layer 11 comprises one or more supports 20 in which the plants 81 are placed for growing the plants 81. The supports 20 may for instance be longitudinal gutters 20, maar other supports 20 suitable for growing plants known to the person skilled in the art may also be used. In the supports 20, the plants 81 are respectively arranged at predetermined distances from each other to allow the plants sufficient space to grow. Here, individual plants 81 may be placed respectively at the predetermined distance from each other. As shown in Figure 1, the plants 81 may also be grouped in clusters 80 of multiple plants 81, which clusters 80 are then respectively placed at the predetermined distance from each other in the supports 20. In one and the same cluster 80, the plants 81 are then placed relatively close to each other at mutual distances that are significantly smaller than the predetermined distance to other clusters 80.

Each growing layer 11 comprises an LED lighting 30 positioned over the plants 81 located in the supports 20 for illuminating these plants 81. The LED lighting 30 comprises LED strips 31 in which LEDs 32 are respectively placed at the predetermined distance from each other for illuminating the different clusters 80 of plants 81. If so desired, multiple LEDs 32 may also be provided for illuminating one and the same cluster 80 of plants 81.

Furthermore, each growing layer 11 comprises a ventilation system 40 that is arranged for air regulation, that is, climate control, in the vicinity of the plants 81 in the supports 20. To this end, the ventilation system 40 comprises a plurality of air regulating ducts 41, wherein respectively one or more air regulating ducts 41 are provided for each cluster 80 of plants 81. The air regulating ducts 41 are arranged for providing a conditioned air flow onto the plants 81 in the different clusters 80. The air regulating ducts 41 are arranged in such a way that they open at the base 82 of the plants 81 for providing the conditioned air flow from the base 82 of the plants 81 along the length direction of the plants 81. Here, the conditioned air flow is preferably provided by the air regulating ducts 41 at a predetermined speed so that the speed of the conditioned air flow in the vicinity of the LED lighting 30 is substantially zero. This results in a bubble of the conditioned air being created around the plants 81. If so desired, additional air regulating ducts (not shown) may also be provided between the different clusters 80 of plants 81.

For conveying away the excess heat generated by the LED lighting 30, the growing layer 11 is provided with an evacuating system comprising a heat sink 51 and an evacuating duct 52. The heat sink 51 is in thermal contact with the LED lighting 30, and the evacuating duct 52 is in turn in thermal contact with the heat sink 51. In the embodiment shown in Figure 1, the heat sink 51 is constituted by part of the duct wall 54 of the evacuating duct 52. The heat sink 51 is made from a material with a good thermal conductivity for transferring the excess heat of the LED lighting 30 to the evacuating duct 52. In the evacuating duct 52, a fluid 53 is flowing, for instance a liquid such as water, which is arranged for being able to absorb the excess heat from the LED lighting 30 that was transferred via the heat sink 51 from the LED lighting 30 to the evacuating duct 52. The fluid flowing in the evacuating duct 52 allows the excess heat generated by the LED lighting 30 to be carried off virtually completely.

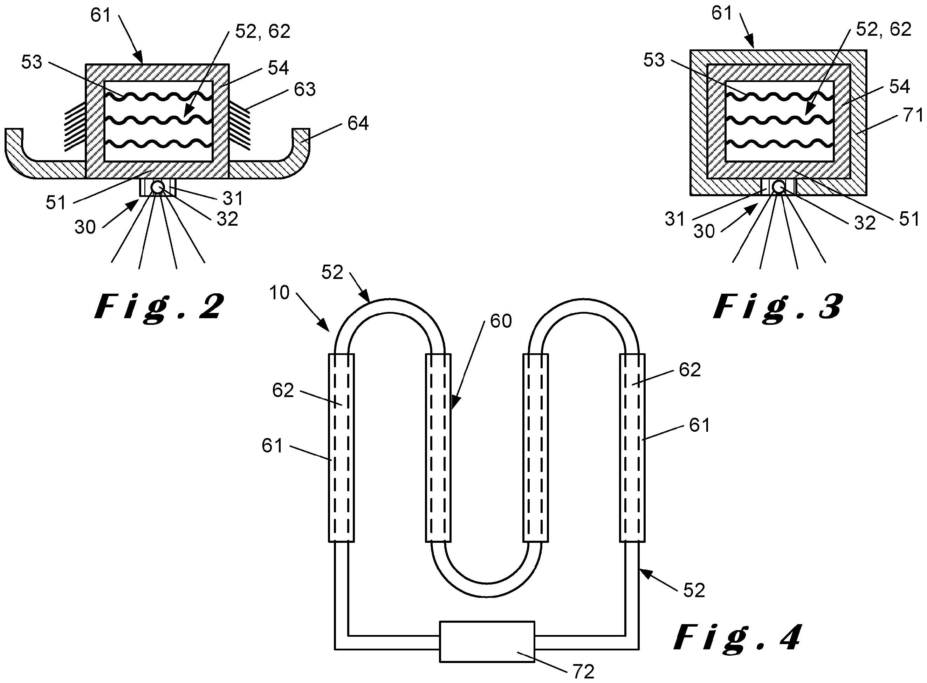

As shown in Figure 4, the evacuating duct 52 constitutes a closed circuit to which a heat exchanger 72 is connected. As the fluid flows through the heat exchanger 72, the heat in the fluid 53 of the evacuating duct 52 is transferred to a further fluid in another duct, which is in thermal contact with the evacuating duct 52. As such, the fluid 53 in the evacuating duct 52, after being heated by absorbing excess heat of the LED lighting 30, may be cooled again to a sufficient degree to be reused for absorbing excess heat from the LED lighting 30. For extracting heat from the fluid 53, the evacuating duct 52 may also be led partly outside the growing space 10, so that the fluid 53 in the evacuating duct 52 can there dissipate its heat to the environment.

As also shown in Figure 4, the evacuating duct 52 is partly housed in a frame 60 that is constructed from a series of hollow beams 61. The hollow beams 61 are arranged to extend along their length direction over the supports 20, as shown in Figure 1. In the frame 60, the evacuating duct 52 is constituted by the cavities 62 in the beams 61. The parts of the evacuating duct 52 located outside the frame 60 are then connected to these cavities 62 at the ends of the beams 61 for forming the closed circuit. As a result, the evacuating duct 52 runs serially through the different beams 61.

However, in an alternative embodiment, it is also possible to provide a parallel arrangement, wherein a separate evacuating duct 52 is used for each of the beams 61. This may for instance be useful in case the amount of excess heat to be conveyed away from the LED lighting 30 is large, as a result of which, when serially going through the beams 61, the fluid 53 in the evacuating duct 52, when reaching the further beams 61, would possibly already be heated too much to be able to convey the excess heat away from the LED lighting 30 efficiently. In such a parallel arrangement, each of the separate evacuating ducts 52 will then lead from the heat exchanger 72 through the cavity 62 of a different beam 61 each time, and then directly return to the heat exchanger 72. In that case, the evacuating duct can lead back through the beam 61 itself, through the same cavity 62, separated by a wall, or through a separate cavity provided thereto. This may for instance by advantageous for further conveying away excess heat from the LED lighting 30. The evacuating duct may however also return outside of the beam 61, where the evacuating duct 52 may for instance be used for other functions, such as for instance contributing to conditioning the air in the air regulating ducts 41 or dehumidifying the air in the growing space 10.

As shown in Figures 1-3, the LED strips 31 of the LED lighting 30 may be arranged against the underside of the beams 61 along the length direction. Here, Figure 1 shows a cross section along the length direction, and Figures 2 and 3 show a cross section perpendicular to the length direction. The section of the beam 61 between the LED strip 31 and the cavity 62 then constitutes the heat sink 51. To this end, at least this section of the hollow beam 61 is made from a material having a good thermal conductivity, such as for instance aluminum. Thus, the frame 60 offers a sturdy and simple structure in which the evacuating duct 52 and the heat sink 51 can be combined. Preferably, the frame 60 as a whole is made from aluminum, for the sake of sturdiness, low weight and good thermal conductivity.

The frame 60 of a given growing layer 11 may also advantageously be used for supporting the supports 20 and the ventilation system 40 of a higher growing layer 11 in the growing space 10. Here, the air regulating ducts 41 of the higher growing layer 11 may be in thermal contact with the evacuating duct 52 of the given growing layer 11, so that the fluid 53 in the evacuating duct 52 of the given growing layer 11, in addition to its primary function of carrying away the excess heat from the LED lighting 30 of the given growing layer 11, may also be used for conditioning the air in the air regulating ducts 41 of the higher growing layer 11.

In an embodiment of the growing space 10 according to the present invention, as shown in Figure 2, the growing space 10 is provided with an air dehumidifier 63 for extracting excess moisture in the air in the growing space 10. In the embodiment of Figure 2, the air dehumidifier 63 is shaped as fins 63 arranged on the duct wall 54 of the evacuating duct 52 above a protrusion 64 on the hollow beam 61. The fins 63 are narrow plate-shaped elements arranged for making the excess moisture in the air in the growing space 10 condense thereon. The condensation heat released when condensing the excess moisture onto the fins 63 may also be carried away by means of the fluid 53 in the evacuating duct 52. The protrusion 64 above which the fins 63 are arranged forms a gutter 64 for collecting and carrying off the condensed excess liquid.

In contrast, in another embodiment of the growing space 10 according to the present invention, as shown in Figure 3, the growing space 10 is arranged for limiting the influence of the evacuating duct 52 on its environment in the growing space 10, as a result of a thermal insulation 71 being arranged around the duct wall 54 of the evacuating duct 52 constituted by the hollow beam 61. As a result of this, the evacuating duct 52 is tailored to its primary function of carrying away the excess heat of the LED lighting 30, while other functions, such as for instance contributing to extracting the excess moisture in the air in the growing space 10 or contributing to conditioning the air in the air regulating ducts 41, can be left to other devices.

### References

- 10: growing space
- 11: growing layer
- 20: support
- 30: LED lighting
- 31: LED strip
- 32: LED
- 40: ventilation system
- 41: air regulating duct
- 51: heat sink
- 52: evacuating duct
- 53: fluid
- 54: duct wall
- 60: frame
- 61: beam
- 62: cavity
- 63: fins
- 64: gutter
- 71: thermal insulation
- 72: heat exchanger
- 80: cluster
- 81: plant
- 82: base

## Claims

1. Growing space (10) for vertical farming, which growing space (10) comprises at least one growing layer (11), each growing layer (11) comprising:
one or more supports (20) arranged for growing a plurality of plants (81);
an LED lighting (30) arranged for illuminating the plants (81) in the supports (20);
a ventilation system (40) having a plurality of air regulating ducts (41), wherein each air regulating duct (41) is arranged for providing a conditioned air flow onto a cluster (80) of at least one plant (81) of the plurality of plants (81) in the one or more supports (20) for air regulation in the vicinity of the respective cluster (80); **characterised in that** each growing layer further comprises:
a heat sink (51) in thermal contact with the LED lighting (30) and arranged for directing away excess heat generated by the LED lighting (30); and
an evacuating duct (52) in thermal contact with the heat sink (51) and configured for a fluid flow for substantially completely carrying away the excess heat generated by the LED lighting (30).

2. The growing space (10) according to claim 1, wherein the evacuating duct (52) is configured for a liquid flow, in particular a flow of a liquid comprising water.

3. The growing space (10) according to claim 1 or 2, wherein the LED lighting (30) comprises a plurality of LEDs (32) mounted onto a frame (60), in particular an aluminum frame (60).

4. The growing space (10) according to claim 3, wherein the evacuating duct (52) has a duct wall (54), wherein the duct wall (54) is at least partly constituted by the frame (60).

5. The growing space (10) according to claim 3 or 4, wherein the heat sink (51) is constituted by the frame (60).

6. The growing space (10) according to claim 5 when depending on claim 4, wherein the duct wall (54) is constituted by the heat sink (51).

7. The growing space (10) according to any of the claims 3-6, wherein the frame (60) comprises one or more hollow beams (61), wherein the cavities (62) in the beams (61) are part of the evacuating duct (52).

8. The growing space (10) according to claim 7, wherein each of said beams (61) is located over one of the one or more supports (20).

9. The growing space (10) according to any of the claims 1-8, wherein the growing space (10) comprises an air dehumidifier (63) arranged for extracting excess moisture that is present in the air in the growing space (10).

10. The growing space (10) according to claim 9 when depending on claim 3, wherein the frame (60) is provided with one or more fins (63) arranged for condensing said excess moisture, and wherein the frame (60) is provided with a gutter (64) arranged for collecting and preferably also conveying away the condensed excess liquid.

11. The growing space (10) according to claim 10 when depending on claim 4, wherein the fins (63) are part of the duct wall (54).

12. The growing space (10) according to any of the claims 1-11, wherein the evacuating duct (52) is surrounded by a thermal insulation (71).

13. The growing space (10) according to any of the claims 1-12, wherein each air regulating duct (41) is arranged for providing the conditioned air flow from the base (82) of the plants (81).

14. The growing space (10) according to claim 13, wherein each air regulating duct is arranged for providing the conditioned air flow at a predetermined speed so that the speed of the conditioned air flow near the LED lighting is substantially zero.

15. The growing space (10) according to any of the claims 1-14, wherein the evacuating duct (52) forms a closed circuit to which a heat exchanger (72) is connected which is arranged for extracting heat from the fluid.

## Patentansprüche

1. Wachsraum (10) für vertikale Landwirtschaft, wobei dieser Wachsraum (10) mindestens eine Wachstumsschicht (11) umfasst, wobei jede Wachstumsschicht (11) Folgendes umfasst:
einen oder mehrere Träger (20), angeordnet, um darauf eine Vielzahl von Pflanzen (81) wachsen zu lassen;
eine LED-Beleuchtung (30), angeordnet, um die Pflanzen (81) in den Trägern (20) zu beleuchten;
ein Lüftungssystem (40) mit einer Vielzahl von Luftregulierungskanälen (41), wobei jeder Luftregulierungskanal (41) angeordnet ist, um einen klimatisierten Luftstrom auf eine Ansammlung (80) von mindestens einer Pflanze (81) der Vielzahl von Pflanzen (81) in dem einen oder mehreren Trägern (20) zur Luftregulierung in der Nähe der zugehörigen Ansammlung (80) bereitzustellen; **dadurch gekennzeichnet, dass** jede Wachstumsschicht ferner Folgendes umfasst:
einen Wärmeableiter (51) in thermischem Kontakt mit der LED-Beleuchtung (30) und angeordnet, um durch die LED-Beleuchtung (30) erzeugte überschüssige Wärme abzuleiten; und
einen Ableitungskanal (52) in thermischem Kontakt mit dem Wärmeableiter (51) und konfiguriert für einen Fluidstrom, um die durch die LED-Beleuchtung (30) erzeugte überschüssige Wärme im Wesentlichen vollständig abzuführen.

2. Der Wachsraum (10) nach Anspruch 1, wobei der Ableitungskanal (52) für einen Flüssigkeitsstrom konfiguriert ist, insbesondere einen Strom einer Flüssigkeit, welche Wasser umfasst.

3. Der Wachsraum (10) nach Anspruch 1 oder 2, wobei die LED-Beleuchtung (30) eine Vielzahl von LEDs (32) umfasst, montiert auf einen Rahmen (60), insbesondere einen Aluminiumrahmen (60).

4. Der Wachsraum (10) nach Anspruch 3, wobei der Ableitungskanal (52) eine Kanalwand (54) hat, wobei die Kanalwand (54) zumindest teilweise durch den Rahmen (60) gebildet ist.

5. Der Wachsraum (10) nach Anspruch 3 oder 4, wobei der Wärmeableiter (51) durch den Rahmen (60) gebildet ist.

6. Der Wachsraum (10) nach Anspruch 5, wenn in Abhängigkeit von Anspruch 4, wobei die Kanalwand (54) durch den Wärmeableiter (51) gebildet ist.

7. Der Wachsraum (10) nach irgendeinem der Ansprüche 3 bis 6, wobei der Rahmen (60) einen oder mehrere hohle Balken (61) umfasst, wobei die Hohlräume (62) in den Balken (61) Teil des Ableitungskanals (52) sind.

8. Der Wachsraum (10) nach Anspruch 7, wobei sich jeder der erwähnten Balken (61) über einem der ein oder mehreren Träger (20) befindet.

9. Der Wachsraum (10) nach irgendeinem der Ansprüche 1 bis 8, wobei der Wachsraum (10) einen Luftentfeuchter (63) umfasst, angeordnet, um überschüssige Feuchtigkeit abzuführen, die in der Luft im Wachsraum (10) vorhanden ist.

10. Der Wachsraum (10) nach Anspruch 9, wenn in Abhängigkeit von Anspruch 3, wobei der Rahmen (60) mit einer oder mehreren Lamellen (63) versehen ist, angeordnet, um die erwähnte überschüssige Feuchtigkeit zu kondensieren, und wobei der Rahmen (60) mit einer Rinne (64) versehen ist, angeordnet, um die kondensierte überschüssige Flüssigkeit zu sammeln und bevorzugt auch abzuführen.

11. Der Wachsraum (10) nach Anspruch 10, wenn in Abhängigkeit von Anspruch 4, wobei die Lamellen (63) Teil der Kanalwand (54) sind.

12. Der Wachsraum (10) nach irgendeinem der Ansprüche 1 bis 11, wobei der Ableitungskanal (52) durch eine Wärmedämmung (71) umgeben ist.

13. Der Wachsraum (10) nach irgendeinem der Ansprüche 1 bis 12, wobei jeder Luftregulierungskanal (41) angeordnet ist, um den klimatisierten Luftstrom von der Basis (82) der Pflanzen (81) bereitzustellen.

14. Der Wachsraum (10) nach Anspruch 13, wobei jeder Luftregulierungskanal angeordnet ist, um den klimatisierten Luftstrom mit einer voreingestellten Geschwindigkeit bereitzustellen, sodass die Geschwindigkeit des klimatisierten Luftstroms dicht bei der LED-Beleuchtung im Wesentlichen null ist.

15. Der Wachsraum (10) nach irgendeinem der Ansprüche 1 bis 14, wobei der Ableitungskanal (52) einen geschlossenen Kreislauf bildet, an den ein Wärmetauscher (72) angeschlossen ist, der angeordnet ist, um Wärme aus der Flüssigkeit zu extrahieren.

## Revendications

1. Espace de culture (10) pour une agriculture verticale, lequel espace de culture (10) comprend au moins une couche de culture (11), chaque couche de culture (11) comprenant :
un ou plusieurs supports (20) agencés pour cultiver une pluralité de plantes (81) ;
un éclairage à DEL (30) agencé pour éclairer les plantes (81) dans les supports (20) ;
un système de ventilation (40) présentant une pluralité de conduits de régulation d'air (41), dans lequel chaque conduit de régulation d'air (41) est agencé pour fournir un flux d'air conditionné sur un groupe (80) d'au moins une plante (81) de la pluralité de plantes (81) dans les un ou plusieurs supports (20) pour une régulation de l'air à proximité du groupe respectif (80) ; **caractérisé en ce que** chaque couche de culture comprend en outre :
un dissipateur thermique (51) en contact thermique avec l'éclairage à DEL (30) et agencé pour éloigner un excès de chaleur générée par l'éclairage à DEL (30) ; et
un conduit d'évacuation (52) en contact thermique avec le dissipateur thermique (51). et configuré pour qu'un écoulement de fluide évacue sensiblement complètement l'excès de chaleur générée par l'éclairage à DEL (30).

2. Espace de culture (10) selon la revendication 1, dans lequel le conduit d'évacuation (52) est configuré pour un écoulement de liquide, en particulier un écoulement d'un liquide comprenant de l'eau.

3. Espace de culture (10) selon la revendication 1 ou 2, dans lequel l'éclairage à DEL (30) comprend une pluralité de DEL (32) montées sur un cadre (60), en particulier un cadre en aluminium (60).

4. Espace de culture (10) selon la revendication 3, dans lequel le conduit d'évacuation (52) présente une paroi de conduit (54), dans lequel la paroi de conduit (54) est au moins partiellement constituée par le cadre (60).

5. Espace de culture (10) selon la revendication 3 ou 4, dans lequel le dissipateur thermique (51) est constitué par le cadre (60)

6. Espace de culture (10) selon la revendication 5 lorsqu'elle dépend de la revendication 4, dans lequel la paroi de conduit (54) est constituée par le dissipateur thermique (51).

7. Espace de culture (10) selon l'une quelconque des revendications 3-6, dans lequel le cadre (60) comprend une ou plusieurs poutres creuses (61), dans lequel les cavités (62) dans les poutres (61) font partie du conduit d'évacuation (52).

8. Espace de culture (10) selon la revendication 7, dans lequel chacune desdites poutres (61) est située sur un des un ou plusieurs supports (20).

9. Espace de culture (10) selon l'une quelconque des revendications 1-8, dans lequel l'espace de culture (10) comprend un déshumidificateur d'air (63) agencé pour extraire un excès d'humidité qui est présente dans l'air dans l'espace de culture (10).

10. Espace de culture (10) selon la revendication 9 lorsqu'elle dépend de la revendication 3, dans lequel le cadre (60) est pourvu d'une ou de plusieurs ailettes (63) agencées pour condenser ledit excès d'humidité et dans lequel le cadre (60) est pourvu d'une gouttière (64) agencée pour collecter et, de préférence, également transporter à distance l'excès de liquide condensé.

11. Espace de culture (10) selon la revendication 10 lorsqu'elle dépend de la revendication 4, dans lequel les ailettes (63) font partie de la paroi de conduit (54).

12. Espace de culture (10) selon l'une quelconque des revendications 1-11, dans lequel le conduit d'évacuation (52) est entouré par une isolation thermique (71).

13. Espace de culture (10) selon l'une quelconque des revendications 1-12, dans lequel chaque conduit de régulation d'air (41) est agencé pour fournir le flux d'air conditionné à partir de la base (82) des plantes (81).

14. Espace de culture (10) selon la revendication 13, dans lequel chaque conduit de régulation d'air est agencé pour fournir le flux d'air conditionné à une vitesse prédéterminée de telle sorte que la vitesse du flux d'air conditionné près de l'éclairage à DEL soit sensiblement nulle.

15. Espace de culture (10) selon l'une quelconque des revendications 1-14, dans lequel le conduit d'évacuation (52) forme un circuit fermé auquel un échangeur de chaleur (72) est raccordé, qui est agencé pour extraire la chaleur du fluide.
